# EUROPÄISCHE PATENTSCHRIFT

(11) **EP 3 507 470 B1**
(45) Veröffentlichungstag und Bekanntmachung des Hinweises auf die Patenterteilung: **01.07.2020**
(21) Anmeldenummer: 17758539.5
(22) Anmeldetag: 28.08.2017
(51) Int. Cl.: F01N 3/20, F01N 13/16

(54) **ZUFÜHRVORRICHTUNG FÜR EINE GEFRIERGEFÄHRDETE FLÜSSIGKEIT IN EINE FLUIDLEITUNG EINES KRAFTFAHRZEUGS**
FEED DEVICE FOR FEEDING A LIQUID AT RISK OF FREEZING INTO A FLUID LINE OF A MOTOR VEHICLE
DISPOSITIF D'AMENÉE D' UN LIQUIDE RISQUANT DE GELER DANS UNE CONDUITE DE FLUIDE D'UN VÉHICULE AUTOMOBILE

(30) Priorität: 01.09.2016 DE 102016216570
(43) Veröffentlichungstag der Anmeldung: 10.07.2019
(73) Patentinhaber: Bayerische Motoren Werke Aktiengesellschaft, 80809 München (DE)
(72) Erfinder: BRUHN, Andreas, 82178 Puchheim (DE); WOLF, Markus, 80809 München (DE)
(86) Internationale Anmeldenummer: PCT/EP2017/071575
(87) Internationale Veröffentlichungsnummer: WO 2018/041792

(56) Entgegenhaltungen:
- EP-A2- 2 669 484
- WO-A1-02/24311
- DE-A1-102008 055 060
- US-A1- 2011 047 972
- US-A1- 2012 144 808

## Beschreibung

Die Erfindung betrifft eine Zuführ-Vorrichtung für eine gefriergefährdete Flüssigkeit in eine Fluidleitung eines Kraftfahrzeugs mit einer von einem Vorratsbehälter zu einem gesteuert öffnenden Abgabeorgan führenden Leitung, durch welche die noch im und stromauf des Abgabeorgans befindliche Flüssigkeit nach Außerbetriebnahme des Kraftfahrzeugs (für einen begrenzten Zeitraum) in den Vorratsbehälter zurück förderbar ist. Zum Stand der Technik gehören die Druckschriften DE 10 2012 208 936 A1, EP 2 669 484 A2 und DE 10 2008 055060 A1 und WO 02/24311 A1.

Analog dem genannten Stand der Technik kann es sich auch vorliegend bei der besagten gefriergefährdeten Flüssigkeit um eine wässrige Harnstofflösung handeln, die dem Abgasstrom einer das Kraftfahrzeug antreibenden Brennkraftmaschine beimengbar und hierfür in die Fzg.-Abgasanlage einspritzbar ist. Damit die Zuführvorrichtung bei bei tiefen Temperaturen abgestelltem Kraftfahrzeug durch Gefrieren der besagten Flüssigkeit keinen Schaden nimmt, wird diese Flüssigkeit nach oder mit einem Abstellen des Fahrzeugs bzw. Außerbetriebnahme desselben für einen vorhersehbar gewissen Zeitraum (so bspw. über Nacht) aus der Zuführ-Vorrichtung in einen bzw. den Vorratsbehälter, welcher beheizbar ausgeführt ist, zurückgefördert. Nach Wiederinbetriebnahme des Fahrzeugs kann somit relativ kurzfristig diese Flüssigkeit durch die vorzugsweise ihrerseits beheizbare Leitung dem Abgabeorgan zugeführt werden.

Ausdrücklich darauf hingewiesen sei an dieser Stelle, dass die vorliegende Erfindung keineswegs auf eine wässrige Harnstofflösung als gefriergefährdete Flüssigkeit beschränkt ist, sondern dass eine erfindungsgemäße Zuführ-Vorrichtung für jegliche gefriergefährdete Flüssigkeit in einem Kraftfahrzeug zur Anwendung kommen kann, so bspw. auch für Scheibenwaschwasser oder Wasser, welches bspw. dem zur Fzg.-Brennkraftmaschine gelangenden Ansaugluftstrom beimengbar oder in die Brennräume der Brennkraftmaschine einspritzbar ist.

Naturgemäß gelangt beim Zurückfördern von Flüssigkeit in den Vorratsbehälter (in Verbindung mit einer Außerbetriebnahme des Fahrzeugs) Luft in die vom Vorratsbehälter zum Abgabeorgan führende Leitung, welche bis zur Wiederinbetriebnahme des Fahrzeugs in dieser Leitung verbleibt. Soll dann bei Betrieb des Kraftfahrzeugs in die genannte Fluidleitung eine vorbestimmte Menge der gefriergefährdeten Flüssigkeit eingespritzt werden, so liegt zunächst eine Fehldosierung vor, weil mit einem Öffnen des Abgabeorgans zunächst die in der besagte Leitung befindliche Luft in die Fluidleitung eingeführt wird.

Eine Abhilfemaßnahme für diese geschilderte Problematik aufzuzeigen, ist Aufgabe der vorliegenden Erfindung.

Die Lösung dieser Aufgabe ist für eine Zuführ-Vorrichtung nach dem Oberbegriff des Anspruchs 1 dadurch gekennzeichnet, dass die Entlüftungsvorrichtung durch eine am Abgabeorgan oder in der genannten Leitung in unmittelbarer Nähe des Abgabeorgans vorgesehene Entlüftungsöffnung gebildet ist, die von einer luftdurchlässigen Membran abgedeckt ist, welche zumindest bis zu in der genannten Leitung maximal herrschenden Druckwerten undurchlässig für die gefriergefährdete Flüssigkeit ist.Vorteilhafte Aus- und Weiterbildungen sind Inhalt der Unteransprüche.
Erfindungsgemäß kann bei Wiederinbetriebnahme des Fahrzeugs zunächst - wie auch heute bereits üblich - die vom Vorratsbehälter zum Abgabeorgan führende Leitung soweit als möglich mit der gefriergefährdeten Flüssigkeit befüllt werden, wobei jedoch abweichend vom bekannten Stand der Technik die in der Leitung befindliche Luft durch die zugeführte Flüssigkeit in die Umgebung verdrängt wird, und zwar durch die nahe des Abgabeorgans vorgesehene Entlüftungsöffnung. Letztere muss selbstverständlich für die abzuführende Luft bzw. Luftmenge offen sein, wobei diese Öffnung für eine Entlüftung der Leitung unabhängig vom gesteuerten Öffnen des Abgabeorgans ist. Dabei kann durchaus die Entlüftung bzw. Abführung der Luft durch das Abgabeorgan hindurch erfolgen, wobei nur sichergestellt sein muss, dass dieses im Hinblick auf eine Abfuhr von Luft aus der besagten Leitung und nicht für eine Abgabe von gefriergefährdeter Flüssigkeit öffnet. Dabei sollte diese Entlüftungsöffnung für die gefriergefährdete Flüssigkeit geschlossen sein oder geschlossen werden, d.h. sobald die zunächst in der besagten Leitung enthaltene Luft durch die Entlüftungsöffnung abgeführt ist und Flüssigkeit zur Entlüftungsöffnung gelangt, sollte ein Austreten dieser Flüssigkeit durch diese Entlüftungsöffnung hindurch verhindert werden. Hierfür kann beispielsweise nicht erfindungsgemäss ein geeignet angesteuertes Ventil an der Entlüftungsöffnung vorgesehen sein, welches zu den geeigneten Zeitpunkten öffnet und schließt.

Die Entlüftungsöffnung ist erfindungsgemäss von einer luftdurchlässigen Membran abgedeckt, welche zumindest bis zu in der genannten Leitung maximal herrschenden Druckwerten undurchlässig für die gefriergefährdete Flüssigkeit ist. Derartige Membranen bzw. ein hierfür geeignetes Material ist grundsätzlich bekannt, so bspw. als atmungsaktives und wasserdichtes Bekleidungsmaterial. Um dieser Membran beim Abdecken einer einfachen Belüftungsöffnung die nötige Stabilität zu verleihen, kann an der Entlüftungsöffnung eine diese querende Stützstruktur für die Membran vorgesehen sein. Diese Stützstruktur kann bspw. in Form einer gelochten, d.h. eine Vielzahl von nebeneinander liegenden kleinen Durchbrüchen oder Löchern aufweisenden Wand ausgeführt sein.

Weiterhin wird insbesondere in Verbindung mit einer soeben genannten Membran vorgeschlagen, an der Entlüftungsöffnung ein diese überdeckendes und beim Zurückfördern der gefriergefährdeten Flüssigkeit als sperrendes Rückschlagventil wirkendes Pilzventil vorzusehen. Die Funktion als Rückschlagventil ist insbesondere dann, wenn die Entlüftungsöffnung abseits des Abgabeorgans vorgesehen ist einfach verständlich, denn es soll beim Zurückfördern von gefriergefährdeter Flüssigkeit in Verbindung mit einer zeitweiligen Außerbetriebnahme des Fahrzeugs auch das Abgabeorgan quasi leergesaugt werden, weshalb dieses Rückfördern üblicherweise durch das geöffnete Abgabeorgan hindurch erfolgt. Um also beim Rückfördern ein Ansaugen von Luft durch die Entlüftungsöffnung zu verhindern, sollte diese dann geschlossen sein, was einfach mittels eines geeignet orientierten, d.h. bei Unterdruck (gegenüber Umgebungsdruck) in der Leitung zu dieser hin schließenden Rückschlagventils erfolgen kann. Ein grundsätzlich bekanntes Pilzventil (vgl. bspw. DE 10 2006 026 135 A1) zeichnet sich hierfür durch einfachste Bauweise aus und ist vorteilhafterweise gleichzeitig geeignet, die genannte Membran vor Beschädigung zu schützen. Selbstverständlich kann auch ein anderes für diese entsprechende Funktion geeignetes Ventil verwendet werden, so beispielsweise ein Schnabelventil oder ein Kugelfederventil. Letzteres kann gleichzeitig die weiter oben genannte Stützstruktur bilden bzw. enthalten.

Um beim Entlüften der Leitung die darin befindliche Luft möglichst vollständig durch die Entlüftungsöffnung abzuführen, wird vorgeschlagen, die Entlüftungsöffnung in Fahrzeug-Hochsachrichtung betrachtet möglichst weit oben liegend an der Leitung vorzusehen. Bestandteil dieser Leitung kann dabei auch ein sog. Quick-Connector sein, der als Leitungsverbinder zum Abgabeorgan fungiert und bspw. rechtwinkelig geformt ist mit im Einbauzustand im Fahrzeug in Hochachsrichtung betrachtet unten liegendem Abgabeorgan und von seitlich annährend horizontal zum Quick-Connector führender Leitung für die gefriergefährdete Flüssigkeit, insbesondere wässrige Harnstofflösung.

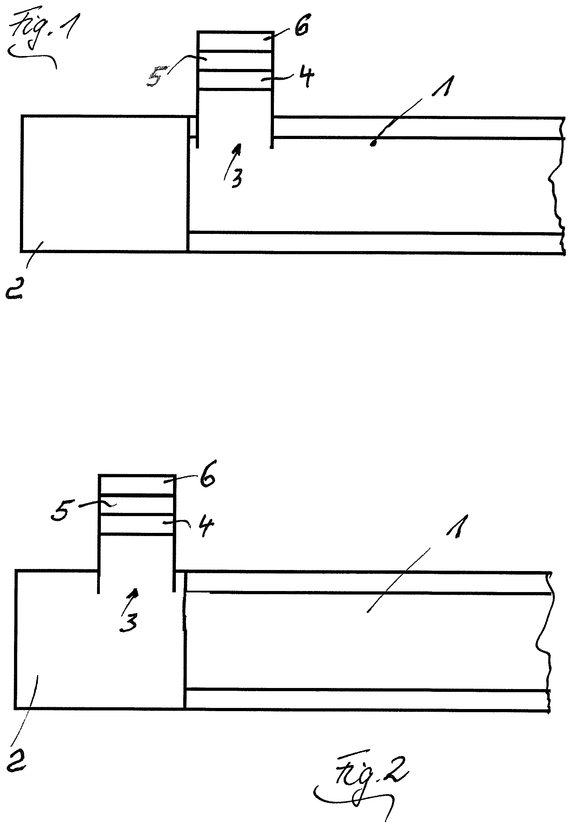

Zwei auf das wesentliche abstrahiert dargestellte Ausführungsbeispiele zeigen die beigefügten Figuren 1, 2. Darin ist mit der Bezugsziffer 1 eine von einem in den Figuren rechtsseitig liegenden nicht gezeigten Vorratsbehälter zu einem soeben genannten Quick-Connector 2 führende Leitung für bspw. wässrige Harnstofflösung gekennzeichnet. An den Quick-Connector 2 schließt sich in den Figuren nach unten hin ein nicht gezeigtes Abgabeorgan an, welches an die ebenfalls nicht gezeigte Abgasanlage einer das Kraftfahrzeug, in welchem die vorliegende Zuführ-Vorrichtung installiert ist, antreibenden Brennkraftmaschine solchermaßen angeschlossen ist, dass das im Öffnungssinne (von einer elektronischen Steuereinheit) angesteuerte Abgabeorgan eine gewisse Menge von wässriger Harnstofflösung in die Abgasanlage einspritzt.

Nahe dem Abgabeorgan und somit bei Fig.1 in üblicher Strömungsrichtung der wässrigen Harnstofflösung vom Vorratsbehälter zum Abgabeorgan hin betrachtet kurz stromauf des Quick-Connectors 2 ist in der Leitung 1 eine erfindungsgemäße Entlüftungsöffnung 3 vorgesehen, welche von einer vor der Figurenbeschreibung erläuterten luftdurchlässigen und wasserabweisenden Membran 4 überdeckt ist. Hier oberhalb der Membran 4, d.h. auf deren der Entlüftungsöffnung 3 abgewandten Seite ist eine (weiter oben ebenfalls bereits erläuterte) Stützstruktur 5 und auf deren der Membran 3 abgewandten Seite ein weiter oben ebenfalls bereits erläutertes Pilzventil 6 vorgesehen. Letzteres kann in der Stützstruktur geeignet gehalten sein. Wie ersichtlich ist die Entlüftungsöffnung 3 bei Fig.1 in Hochsachrichtung betrachtet möglichst weit oben liegend an der Leitung 1 vorgesehen und ist beim Ausführungsbeispiel nach Fig.2 an einer praktisch vergleichbaren Stelle im Quick-Connector 2 vorgesehen, was eine besonders kostengünstige Lösung darstellt.

## Patentansprüche

1. Zuführ-Vorrichtung für eine gefriergefährdete Flüssigkeit in einer Fluidleitung eines Kraftfahrzeugs mit einem Vorratsbehälter, einem Abgabeorgan und einer vom Vorratsbehälter zum gesteuert öffnenden Abgabeorgan führenden Leitung (1), durch welche die noch im und stromauf des Abgabeorgans befindliche Flüssigkeit nach Außerbetriebnahme des Kraftfahrzeugs in den Vorratsbehälter zurück förderbar ist, wobei eine vom gesteuerten Öffnen des Abgabeorgans unabhängige Entlüftungsvorrichtung vorgesehen ist, mittels derer mit oder nach Wiederinbetriebnahme des Kraftfahrzeugs in der Leitung befindliche Luft abführbar ist,
**dadurch gekennzeichnet, dass** die Entlüftungsvorrichtung durch eine am Abgabeorgan oder in der genannten Leitung (1) in unmittelbarer Nähe des Abgabeorgans vorgesehene Entlüftungsöffnung (3) gebildet ist, die von einer luftdurchlässigen Membran (4) abgedeckt ist, welche zumindest bis zu in der genannten Leitung maximal herrschenden Druckwerten undurchlässig für die gefriergefährdete Flüssigkeit ist.

2. Zuführ-Vorrichtung nach Anspruch 1 mit einer die Entlüftungsöffnung (3) querenden Stützstruktur (5) für die Membran (4).

3. Zuführ-Vorrichtung nach Anspruch 1 oder 2, wobei an der Entlüftungsöffnung (3) ein diese überdeckendes und beim Zurückfördern der gefriergefährdeten Flüssigkeit als sperrendes Rückschlagventil wirkendes Pilzventil (6) vorgesehen ist.

## Claims

1. Device for feeding of a liquid at risk of freezing into a fluid line of a motor vehicle, having a storage container, a delivery element and a line (1) which leads from the storage container to the delivery element, the latter opening in a controlled manner, and through which it is possible to convey back into the storage container the liquid still present in and upstream of the delivery element after the motor vehicle is shut down, wherein provision is made of a venting device which is independent of the controlled opening of the delivery element and by means of which it is possible to discharge air present in the line when or after the motor vehicle is restarted, **characterized in that** the venting device is formed by a venting opening (3) which is provided at the delivery element or in the stated line (1) in the immediate vicinity of the delivery element and which is covered by an air-permeable diaphragm (4) which is not permeable to the liquid at risk of freezing at least up to maximum pressure values prevailing in the stated line.

2. Device for feeding according to Claim 1, having a support structure (5) for the diaphragm (4), which support structure traverses the venting opening (3).

3. Device for feeding according to Claim 1 or 2, wherein provision is made at the venting opening (3) of a mushroom valve (6) which covers said venting opening, and which acts as a blocking check valve when the liquid at risk of freezing is conveyed back.

## Revendications

1. Dispositif d'amenée pour un liquide risquant de geler dans une conduite de fluide d'un véhicule automobile, comprenant un réservoir, un organe de distribution et une conduite (1) conduisant depuis le réservoir jusqu'à l'organe de distribution s'ouvrant de manière commandée, par le biais de laquelle le liquide se trouvant encore dans l'organe de distribution et en amont de celui-ci peut être ramené dans le réservoir après l'arrêt du véhicule automobile, un dispositif de désaérage indépendant de l'ouverture commandée de l'organe de distribution étant prévu, au moyen duquel de l'air se trouvant dans la conduite peut être évacué lors de la remise en marche du véhicule automobile ou après celle-ci,
**caractérisé en ce que** le dispositif de désaérage est formé par une ouverture de désaérage (3) prévue au niveau de l'organe de distribution ou dans ladite conduite (1) à proximité immédiate de l'organe de distribution, laquelle est recouverte par une membrane perméable à l'air (4) qui est imperméable au liquide risquant de geler au moins jusqu'à des valeurs de pression maximales régnant dans ladite conduite.

2. Dispositif d'amenée selon la revendication 1, comprenant une structure de support (5) pour la membrane (4), traversant l'ouverture de désaérage (3) .

3. Dispositif d'amenée selon la revendication 1 ou 2, dans lequel il est prévu, au niveau de l'ouverture de désaérage (3), une soupape champignon (6) recouvrant celle-ci et agissant en tant que clapet antiretour de blocage lorsque le liquide risquant de geler est ramené.
